(19) Europäisches Patentamt
European Patent Office
Office européen des brevets

(11) EP 0 763 976 B1

(12) **EUROPÄISCHE PATENTSCHRIFT**

(45) Veröffentlichungstag und Bekanntmachung des Hinweises auf die Patenterteilung:
**02.09.1998 Patentblatt 1998/36**

(21) Anmeldenummer: **95921767.0**

(22) Anmeldetag: **27.05.1995**

(51) Int. Cl.$^6$: **A01N 47/34**
// (A01N47/34, 37:50, 47:14)

(86) Internationale Anmeldenummer:
**PCT/EP95/02027**

(87) Internationale Veröffentlichungsnummer:
**WO 95/34206 (21.12.1995 Gazette 1995/54)**

(54) **FUNGIZIDE MISCHUNGEN**
FUNGICIDAL MIXTURES
MELANGES FONGICIDES

(84) Benannte Vertragsstaaten:
**AT BE CH DE DK ES FR GB GR IE IT LI NL PT SE**

(30) Priorität: **10.06.1994 DE 4420279**

(43) Veröffentlichungstag der Anmeldung:
**26.03.1997 Patentblatt 1997/13**

(73) Patentinhaber:
**BASF AKTIENGESELLSCHAFT**
**67056 Ludwigshafen (DE)**

(72) Erfinder:
- **AMMERMANN, Eberhard**
  **D-64646 Heppenheim (DE)**
- **LORENZ, Gisela**
  **D-67434 Hambach (DE)**
- **MAPPES, Dietrich**
  **D-67368 Westheim (DE)**
- **SCHELBERGER, Klaus**
  **D-67161 Gönnheim (DE)**
- **HAMPEL, Manfred**
  **D-67435 Neustadt (DE)**

(56) Entgegenhaltungen:
**EP-A- 0 253 213** **EP-A- 0 254 426**
**EP-A- 0 645 089** **EP-A- 0 645 090**
**WO-A-95/15083** **GB-A- 2 267 644**
**GB-A- 2 279 568**

- **RESEARCH DISCLOSURE, Nr. 338, 1992 HAVANT GB, DISCLOSED ANONYMOUSLY 'Disclosure 33893: Mixtures of Fungicides and Insecticides'**
- **CHEMICAL ABSTRACTS, vol. 118, no. 23, 7.Juni 1993 Columbus, Ohio, US; abstract no. 228112, E.AMMERMANN ET AL. 'BAS 490 F - a broad-spectrum fungicide with a new mode of action' & BRIGHTON CROP PROT. CONF.--PESTS DIS., Nr. 1, 1992 Seiten 403-410,**
- **C.R.WORTHING ET AL. 'THE PESTICIDE MANUAL' 1991 , THE BRITISH CROP PROTECTION COUNCIL , FARNHAM, GB siehe Seite 206, 'Cymoxanil', Formulations**

EP 0 763 976 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft eine fungizide Mischung, welche

a) einen Oximethercarbonsäureester der Formel I bzw. Ib

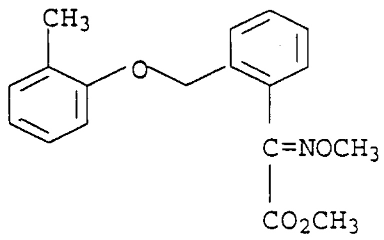

Ia

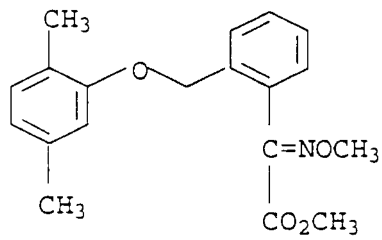

Ib

und

b) 1-(2-Cyano-2-methoxyiminoacetyl)-3-ethylharnstoff (II)

$$H_3CCH_2\text{-NHCONH-CO-C(CN)=NOCH}_3 \qquad \text{II}$$

in einer synergistisch wirksamen Menge enthält.

Daneben betrifft die Erfindung eine fungizide Mischung, welche zusätzlich zum Oximethercarbonsäureester der Formel I (bzw. Ia oder Ib) und dem 1-(2-Cyano-2-methoxyiminoacetyl)-3-ethylharnstoff (II) ein Dithiocarbamat III ausgewählt aus der Gruppe

- Mangan-ethylenbis(dithiocarbamat) (Zinkkomplex) (IIIa),
- Mangan-ethylenbis(dithiocarbamat) (IIIb),
- Zinkammoniat-ethylenbis(dithiocarbamat) (IIIc) und
- Zink-ethylenbis(dithiocarbamat) (IIId)

in einer synergistisch wirksamen Menge enthält.

Außerdem betrifft die Erfindung Verfahren zur Bekämpfung von Schadpilzen mit Mischungen der Verbindungen I und II bzw. Mischungen der Verbindungen I, II und III und die Verwendung der Verbindung I, der Verbindung II und der Verbindungen III zur Herstellung derartiger Mischungen.

Die Verbindungen der Formel Ia und Ib, ihre Herstellung und ihre Wirkung gegen Schadpilze ist aus der Literatur bekannt (EP-A 253 213 und EP-A 254 426).

Ebenfalls bekannt ist die Verbindungen II (US-A 3,957,847; common name: Cymoxanil), deren Herstellung und deren Wirkung gegen Schadpilze.

Die Dithiocarbamate III sind ebenfalls bekannt (IIIa: common name: Mancozeb, US-A 3,379,610; IIIb: common name: Maneb, US-A 2,504,404; IIIc: ehem. common name: Metiram, US-A 3,248,400; IIId: common name: Zinab, US-A 2,457,674).

Für die Vertragsstaaten ES, FR und IT beschreibt die später veröffentlichte EP-A 741 970 synergistische Mischungen der Verbindungen der Formel Ia und II.

Im Hinblick auf eine Senkung der Aufwandmengen und eine Verbesserung des Wirkungsspektrums der bekannten Verbindungen lagen der vorliegenden Erfindungen Mischungen als Aufgabe zugrunde, die bei verringerter Gesamtmenge an ausgebrachten Wirkstoffen eine verbesserte Wirkung gegen Schadpilzen aufweisen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindung I und II bzw. I, II und III oder bei Anwendung der Verbindung I und der Verbindungen II und ggf. der Verbindungen III nacheinander Schadpilze besser bekämpfen lassen als mit den Einzelverbindungen.

Die Verbindungen der Formel I und II können in Bezug auf die C=N -Doppelbindung in der E- oder der Z-Konfiguration (in Bezug auf die Gruppierung Carbonsäurefunkion) vorliegen. Demgemäß können sie in der erfindungsgemäßen Mischung jeweils entweder als reine E- oder Z-Isomere oder als E/Z-Isomerenmischung Verwendung finden. Bevorzugt findet jeweils die E/Z-Isomerenmischung oder das E-Isomere Anwendung, wobei das E-Isomere bei der Verbindung I besonders bevorzugt ist.

Die Verbindung II ist wegen des basischen Charakters der NH-Gruppierung in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure und Salpetersäure.

Als organischen Säuren kommen beispielsweise Ameisensäure, Kohlensäure und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphorsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. die gleichzeitige gemeinsame oder getrennte Verwendung der Verbindungen I und II zeichnen sich durch eine hervorragende Wirkung gegen ein breites Spektrum von pflanzenpathogenen Pilzen, insbesondere aus der Klasse der Ascomyceten und Basidiomyceten, aus. Sie sind z.T. systemisch wirksam und können daher auch als Blatt- und Bodenfungizide eingesetzt werden.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Gerste, Gras, Hafer, Kaffee, Mais, Obstpflanzen, Reis, Roggen, Soja, Wein, Weizen, Zierpflanzen, Zuckerrohr und einer Vielzahl von Samen.

Insbesondere eignen sie sich zur Bekämpfung der folgenden pflanzenpathogenen Pilze: Erysiphe graminis (echter Mehltau) an Getreide, Erysiphe cichoracearum und Sphaerotheca fuliginea an Kürbisgewächsen, Podosphaera leucotricha an Äpfeln, Puccinia-Arten an Getreide, Rhizoctonia-Arten an Baumwolle und Rasen, Ustilago-Arten an Getreide und Zuckerrohr, Venturia inaequalis (Schorf) an Äpfeln, Helminthosporium-Arten an Getreide, Septoria nodorum an Weizen, Botrytis cinera (Grauschimmel) an Erdbeeren und Reben, Cercospora arachidicola an Erdnüssen, Pseudocercosporella herpotrichoides an Weizen und Gerste, Pyricularia oryzae an Reis, Phytophthora infestans an Kartoffeln und Tomaten, Plasmopara viticola an Reben, Alternaria-Arten an Gemüse und Obst sowie Fusarium- und Verticillium-Arten.

Sie sind außerdem im Materialschutz (z.B. Holzschutz) anwendbar, beispielsweise gegen Paecilomyces variocii.

Die Verbindungen I und II können bzw. I, II und III gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 10:1 bis 0.1:1, vorzugsweise 5:1 bis 0.2:1, insbesondere 5:1 bis 1:1 angewendet.

Die Verbindungen I und III werden üblicherweise in einem Gewichtsverhältnis von 1:50 bis 1:2, vorzugsweise 1:40 bis 1:1,8, insbesondere 1:30 bis 1:1,5, angewendet. Die Aufwandmengen der erfindungsgemäßen Mischungen liegen je nach

Art des gewünschten Effekts bei 0,01 bis 3 kg/ha, vorzugsweise 0,1 bis 1,5 kg/ha, insbesondere 0,1 bis 1,0 kg/ha. Die Aufwandmengen liegen dabei für die Verbindungen I bei 0,01 bis 0,5 kg/ha, vorzugsweise 0,05 bis 0,5 kg/ha, insbesondere 0,05 bis 0,4 kg/ha. Die Aufwandmengen für die Verbindungen II liegen entsprechend bei 0,01 bis 0,5 kg/ha, vorzugsweise 0,05 bis 0,5 kg/ha, insbesondere 0,05 bis 0,4 kg/ha.

Die Aufwandmenge für die Verbindungen III liegt im allgemeinen bei 0,1 bis 10 kg/ha, vorzugsweise 0,5 bis 5 kg/ha, insbesondere 1 bis 4 kg/ha.

Bei der Saatgutbehandlung werden im allgemeinen Aufwandmengen an Mischung von 0,001 bis 50 g/kg Saatgut, vorzugsweise 0,01 bis 10 g/kg, insbesondere 0,01 bis 8 g/kg verwendet.

Sofern für Pflanzen pathogene Schadpilze zu bekämpfen sind erfolgt die getrennte oder gemeinsame Applikation

der Verbindungen I und II oder der Mischungen aus den Verbindungen I, II und ggf. III durch besprühen oder bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I, II und ggf. III können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl- oder Nonylphenol, Alkylphenol- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose in Betracht.

Pulver Streu- und Stäubemittel können durch Mischen oder gemeinsames Vermahlen der Verbindungen I, II und ggf. III oder der Mischung aus den Verbindungen I und II bzw. I, II und III mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I, II oder III bzw. der Mischung aus den Verbindungen I und II. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I, II oder III bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Beispiele zur synergistischen Wirkung der erfindungsgemäßen Mischungen gegen Schadpilze

Die fungizide Wirkung der Verbindungen und der Mischungen ließ sich durch folgende Versuche zeigen:

Die Wirkstoffe wurden getrennt oder gemeinsam als 20 %-ige Emulsion in einem Gemisch aus 70 Gew.-% Cyclohexanon, 20 Gew.-% Nekanil® LN (Lutensol® AP6, Netzmittel mit Emulgier- und Dispergierwirkung auf der Basis echoxylierter Alkylphenole) und 10 Gew.-% Emulphor® EL (Emulan® EL, Emulgator auf der Basis ethoxylierter Fettalkohole) aufbereitet und entsprechend der gewünschten Konzentration mit Wasser verdünnt.

Die Auswertung erfolgte durch Feststellung der befallenen Blattflächen in Prozent. Diese Prozent-Werte wurden in Wirkungsgrade umgerechnet. Die zu erwartenden Wirkungsgrade der Wirkstoffmischungen wurden nach der Colby Formel [R.S. Colby, Weeds 15, 20-22 (1967)] ermittelt und mit den beobachteten Wirkungsgraden verglichen. Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der uhbehandelten Kontrolle, beim Einsatz des Wirkstoffs B in der Konzentration b

Bei einem Wirkungsgrad von 0 entspricht der Befall der behandelten Pflanzen demjenigen der unbehandelten Kontrollpflanzen; bei einem Wirkungsgrad von 100 wiesen die behandelten Pflanzen keinen Befall auf.

Wirksamkeit gegen Plasmopara viticola (Rebenperonospora)

Topfreben (Sorte: "Müller Thurgau") wurden mit der Wirkstoffaufbereitung tropfnaß gespritzt. Nach 8 Tagen wurden die Pflanzen mit einer Zoosporenaufschwemmung des Pilzes *Plasmopara viticola* besprüht und zunächst 48 h bei 24°C und 100% Luftfeuchtigkeit bewahrt. Anschließend beließ man die Testpflanzen für 5 Tage bei 20-30°C im Gewächshaus. Vor der Beurteilung wurden die Pflanzen nochmals für 16 h bei hoher Luftfeuchtigkeit bewahrt. Die Auswertung erfolgte visuell auf den Blattunterseiten.

| Wirkstoff | Aufwandmenge [ppm] | Wirkungsgrad [%] |
|---|---|---|
| -/-* | - | 0 |
| Ia | 31 | 48 |
| Ia | 16 | 22 |
| II | 31 | 0 |
| II | 16 | 0 |
| Mischung [Aufwandmenge] | Wirkungsgrad [beobachtet] | Wirkungsgrad [berechnet] |
| Ia + II<br>31 + 31 | 80 | 48 |
| Ia + II<br>16 + 16 | 48 | 22 |

* 77% Befall der unbehandelten Kontrolle

## Patentansprüche

**Patentansprüche für folgende Vertragsstaaten : ES, FR, IT**

**1.** Fungizide Mischung, enthaltend

a) einen Oximethercarbonsäureester der Formel Ib

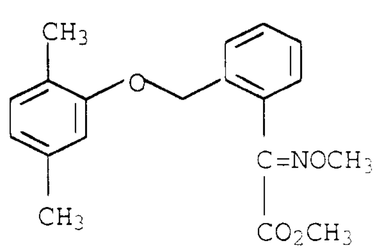

Ib

und

b) 1-(2-Cyano-2-methoxyiminoacetyl)-3-ethylharnstoff (II)

$$H_3CCH_2\text{-NHCONH-CO-C(CN)=NOCH}_3 \qquad II$$

in einer synergistisch wirksamen Menge.

**2.** Mischung enthaltend den Oximetheroarbonsäureester Ia

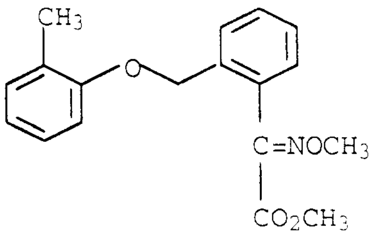

Ia

bzw. Ib, gemäß Anspruch 1, 1-(2-Cyano-2-methoxyiminoacetyl)-3-ethylharnstoff (II) und ein Dithiocarbonat III ausgewählt aus der Gruppe

- Mangan-ethylenbis(dithiocarbamat, (Zinkkomplex) (IIIa),
- Mangan-ethylenbis(dithiocarbamat) (IIIb),
- Zinkammoniat-ethylenbis(dithiocarbamat) (IIIc) und
- Zink-ethylenbis(dithiocarbamat, (IIId)

in einer synergistisch wirksamen Menge.

**3.** Fungizide Mischung nach Anspruch 1 oder 2, dadurch gekennzeichnet, daß das Gewichtsverhältnis der Verbindung Ia bzw. Ib zu der Verbindung II 10:1 bis 0,1:1 beträgt.

**4.** Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen, Materialien oder Räume mit der Verbindung der Formel Ib gemäß Anspruch 1 und der Verbindung der Formel II gemäß Anspruch 1 behandelt.

**5.** Verfahren nach Anspruch 4, dadurch gekennzeichnet, daß man zusätzlich ein Dithiocarbamat III gemäß Anspruch 2 verwendet.

**6.** Verfahren nach Anspruch 4, oder 5 dadurch gekennzeichnet, daß man die Verbindung Ib gemäß Anspruch 1 und die Verbindung II gemäß Anspruch 1 gleichzeitig gemeinsam oder getrennt oder nacheinander ausbringt.

**7.** Verfahren nach Anspruch 4 oder 5, dadurch gekennzeichnet, daß man die Schadpilze, deren Lebensraum oder die von ihnen freizuhaltenden Pflanzen, Samen, Böden, Flächen, Materialien oder Räume mit 0,01 bis 0,5 kg/ha der Verbindung Ib gemäß Anspruch 1 behandelt.

**8.** Verfahren nach Anspruch 3, dadurch gekennzeichnet, daß man die Schadpilze, deren Lebensraum oder die von ihnen freizuhaltenden Pflanzen, Samen, Böden, Flächen, Materialien oder Räume mit 0,01 bis 0,5 kg/ha der Verbindung II gemäß Anspruch 1 behandelt.

**9.** Verfahren nach Anspruch 5, dadurch gekennzeichnet, daß man das Dithiocarbamat III in Mengen von 2:1 bis 50:1 bezogen auf die Verbindung I verwendet.

**10.** Verwendung der Verbindung I gemäß Anspruch 1 zur Herstellung von fungizid wirksamen synergistischen Mischungen gemäß Anspruch 1 oder 2.

**11.** Verwendung der Verbindung II gemäß Anspruch 1 zur Herstellung von fungizid wirksamen synergistischen Mischungen gemäß Anspruch 1.

**12.** Verwendung der Dithiocarbamate III gemäß Anspruch 2 zur Herstellung von fungizid wirksamen synergistischen Mischungen gemäß Anspruch 2.

**Patentansprüche für folgende Vertragsstaaten : AT, BE, CH, DE, DK, GB, GR, IE, NL, PT, SE**

**1.** Fungizide Mischung, enthaltend

a) einen Oximethercarbonsäureester der Formel I a oder Ib

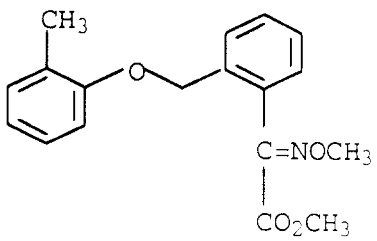

Ia

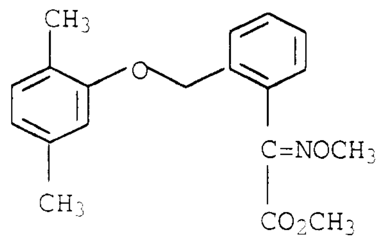

Ib

und

b) 1-(2-Cyano-2-methoxyiminoaoetyl)-3-ethylharnstoff (II)

$$H_3CCH_2\text{-NHCONH-CO-C(CN)=NOCH}_3 \qquad II$$

in einer synergistisch wirksamen Menge.

**2.** Mischung enthaltend den Oximethercarbonsäureester Ia bzw. Ib, gemäß Anspruch 1, 1-(2-Cyano-2-methoxyiminoacetyl)-3-ethylharnstoff (II) und ein Dithiocarbonat III ausgewählt aus der Gruppe

- Mangan-ethylenbis(dithiocarbamat) (Zinkkomplex) (IIIa),
- Mangan-ethylenbis(dithiocarbamat) (IIIb),
- Zinkammoniat-ethylenbis(dithiocarbamat) (IIIc) und
- Zink-ethylenbis(dithiocarbamat) (IIId)

in einer synergistisch wirksamen Menge.

**3.** Fungizide Mischung nach Anspruch 1 oder 2, dadurch gekennzeichnet, daß das Gewichtsverhältnis der Verbindung Ia bzw. Ib zu der Verbindung II 10:1 bis 0,1:1 beträgt.

**4.** Verfahren zur Bekämpfung von Schadpilzen, dadurch gekennzeichnet, daß man die Schadpilze, deren Lebensraum oder die von ihnen freizuhaltenden Pflanzen, Samen, Böden, Flächen, Materialien oder Räume mit der Verbindung der Formel Ia bzw. Ib gemäß Anspruch 1 und der Verbindung der Formel II gemäß Anspruch 1 behandelt.

**5.** Verfahren nach Anspruch 4, dadurch gekennzeichnet, daß man zusätzlich ein Dithiocarbamat III gemäß Anspruch 2 verwendet.

**6.** Verfahren nach Anspruch 4, oder 5 dadurch gekennzeichnet, daß man die Verbindung Ia bzw. Ib gemäß Anspruch 1 und die Verbindung II gemäß Anspruch 1 gleichzeitig gemeinsam oder getrennt oder nacheinander ausbringt.

**7.** Verfahren nach Anspruch 4 oder 5, dadurch gekennzeichnet, daß man die Schadpilze, deren Lebensraum oder die

von ihnen freizuhaltenden Pflanzen, Samen, Böden, Flächen, Materialien oder Räume mit 0,01 bis 0,5 kg/ha der Verbindung Ia bzw. Ib gemäß Anspruch 1 behandelt.

8. Verfahren nach Anspruch 3, dadurch gekennzeichnet, daß man die Schadpilze, deren Lebensraum oder die von ihnen freizuhaltenden Pflanzen, Samen, Böden, Flächen, Materialien oder Räume mit 0,01 bis 0,5 kg/ha der Verbindung II gemäß Anspruch 1 behandelt.

9. Verfahren nach Anspruch 5, dadurch gekennzeichnet, daß man das Dithiocarbamat III in Mengen von 2:1 bis 50:1 bezogen auf die Verbindung I verwendet.

10. Verwendung der Verbindung I gemäß Anspruch 1 zur Herstellung von fungizid wirksamen synergistischen Mischungen gemäß Anspruch 1 oder 2.

11. Verwendung der Verbindung II gemäß Anspruch 1 zur Herstellung von fungizid wirksamen synergistischen Mischungen gemäß Anspruch 1.

12. Verwendung der Dithiocarbamate III gemäß Anspruch 2 zur Herstellung von fungizid wirksamen synergistischen Mischungen gemäß Anspruch 2.

## Claims

**Claims for the following Contracting States : ES, FR, IT**

1. A fungicidal mixture comprising

   a) an oxime ether carboxylic ester of the formula Ib

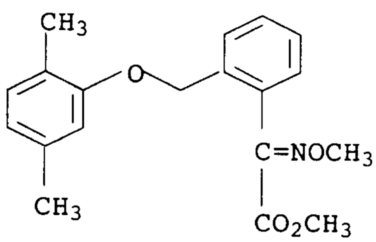

Ib

   and

   b) 1-(2-cyano-2-methoxyiminoacetyl)-3-ethylurea (II)

$$H_3CCH_2\text{-NHCONH-CO-C(CN)=NOCH}_3 \qquad II$$

   in a synergistically effective amount.

2. A mixture comprising the oxime ether carboxylic ester Ia

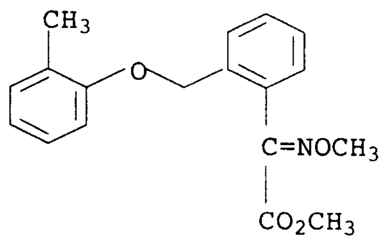

Ia

or Ib as set forth in claim 1, 1-(2-cyano-2-methoxyiminoacetyl)- 3-ethylurea (II) and a dithiocarbamate III selected from the group

- manganese ethylenebis(dithiocarbamate) (zinc complex) (IIIa),
- manganese ethylenebis(dithiocarbamate) (IIIb),
- zinc ammoniate ethylenebis(dithiocarbamate) (IIIc) and
- zinc ethylenebis(dithiocarbamate) (IIId)

in a synergistically effective amount.

3. A fungicidal mixture as claimed in claim 1 or 2, wherein the ratio by weight of compound Ia or Ib to the compound II is from 10:1 to 0.1:1.

4. A method for controlling harmful fungi, which comprises treating the harmful fungi, their habitat or the plants, seeds, soil, areas, materials or rooms to be kept free of them with the compound of the formula Ib as set forth in claim 1 and the compound of the formula II as set forth in claim 1.

5. A method as claimed in claim 4, wherein a dithiocarbamate III as set forth in claim 2 is additionally used.

6. A method as claimed in claim 4 or 5, wherein the compound Ib as set forth in claim 1 and the compound II as set forth in claim 1 are applied simultaneously, together or separately, or successively.

7. A method as claimed in claim 4 or 5, wherein the harmful fungi, their habitat or the plants, seeds, soil, areas, materials or rooms to be kept free of them are treated with from 0.01 to 0.5 kg/ha of the compound Ib as set forth in claim 1.

8. A method as claimed in claim 3, wherein the harmful fungi, their habitat or the plants, seeds, soil, areas, materials or rooms to be kept free of them are treated with from 0.01 to 0.5 kg/ha of the compound II as set forth in claim 1.

9. A method as claimed in claim 5, wherein the dithiocarbamate III is used in amounts of from 2:1 to 50:1 based on compound I.

10. The use of the compound I as set forth in claim 1 for the production of fungicidally effective synergistic mixtures as claimed in claim 1 or 2.

11. The use of the compound II as set forth in claim 1 for the production of fungicidally effective synergistic mixtures as claimed in claim 1.

12. The use of the dithiocarbamates III as set forth in claim 2 for the production of fungicidally effective synergistic mixtures as claimed in claim 2.

**Claims for the following Contracting States : AT, BE, CH, DE, DK, GB, GR, IE, NL, PT, SE**

1. A fungicidal mixture comprising

a) an oxime ether carboxylic ester of the formula Ia or Ib

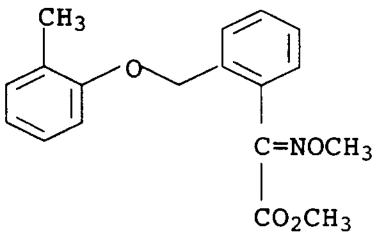

Ia

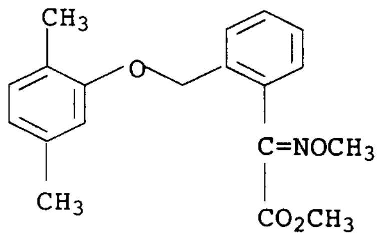

Ib

and

b) 1-(2-cyano-2-methoxyiminoacetyl)-3-ethylurea (II)

$$H_3CCH_2\text{-NHCONH-CO-C(CN)=NOCH}_3 \qquad \text{II}$$

in a synergistically effective amount.

**2.** A mixture comprising the oxime ether carboxylic ester Ia or Ib as set forth in claim 1, 1-(2-cyano-2-methoxyiminoacetyl)-3-ethylurea (II) and a dithiocarbamate III selected from the group

- manganese ethylenebis(dithiocarbamate) (zinc complex) (IIIa),
- manganese ethylenebis(dithiocarbamate) (IIIb),
- zinc ammoniate ethylenebis(dithiocarbamate) (IIIc) and
- zinc ethylenebis(dithiocarbamate) (IIId)

in a synergistically effective amount.

**3.** A fungicidal mixture as claimed in claim 1 or 2, wherein the ratio by weight of compound Ia or Ib to the compound II is from 10:1 to 0.1:1.

**4.** A method for controlling harmful fungi, which comprises treating the harmful fungi, their habitat or the plants, seeds, soil, areas, materials or rooms to be kept free of them with the compound of the formula Ia or Ib as set forth in claim 1 and the compound of the formula II as set forth in claim 1.

**5.** A method as claimed in claim 4, wherein a dithiocarbamate III as set forth in claim 2 is additionally used.

**6.** A method as claimed in claim 4 or 5, wherein the compound Ia or Ib as set forth in claim 1 and the compound II as set forth in claim 1 are applied simultaneously, together or separately, or successively.

**7.** A method as claimed in claim 4 or 5, wherein the harmful fungi, their habitat or the plants, seeds, soil, areas, materials or rooms to be kept free of them are treated with from 0.01 to 0.5 kg/ha of the compound Ia or Ib as set forth in claim 1.

**8.** A method as claimed in claim 3, wherein the harmful fungi, their habitat or the plants, seeds, soil, areas, materials or rooms to be kept free of them are treated with from 0.01 to 0.5 kg/ha of the compound II as set forth in claim 1.

**9.** A method as claimed in claim 5, wherein the dithiocarbamate III is used in amounts of from 2:1 to 50:1 based on compound I.

**10.** The use of the compound I as set forth in claim 1 for the production of fungicidally effective synergistic mixtures as claimed in claim 1 or 2.

11. The use of the compound II as set forth in claim 1 for the production of fungicidally effective synergistic mixtures as claimed in claim 1.

12. The use of the dithiocarbamates III as set forth in claim 2 for the production of fungicidally effective synergistic mixtures as claimed in claim 2.

**Revendications**

**Revendications pour les Etats contractants suivants : ES, FR, IT**

1. Mélange fongicide contenant

a) un ester d'acide oximéthercarboxylique de formule Ib

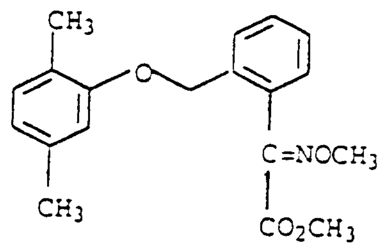

Ib

et

b) la 1-(2-cyano-2-méthoxyiminoacétyl)-3-éthylurée (II)

$$H_3CCH_2\text{-NHCONH-CO-C(CN)=NOCH}_3 \quad \text{II}$$

en quantité synergique efficace.

2. Mélange contenant l'ester d'acide oximéthercarboxylique Ia

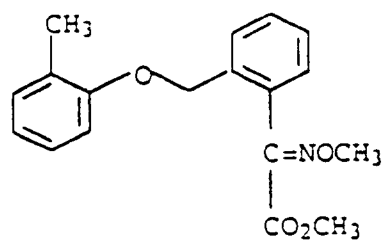

Ia

ou l'ester Ib selon la revendication 1, la 1-(2-cyano-2-méthoxyiminoacétyl)-3-éthylurée (II) et un dithiocarbonate III choisi dans le groupe formé par

- l'éthylènebis-(dithiocarbamate) de manganèse, (complexe de zinc) (IIIa),
- l'éthylènebis-(dithiocarbamate) de manganèse, (IIIb),
- l'éthylènebis-(dithiocarbamate) ammoniacal de zinc (IIIc) et
- l'éthylènebis-(dithiocarbamate) de zinc (IIIb)

en une quantité synergique efficace.

**3.** Mélange fongicide selon la revendication 1 ou 2, caractérisé par le fait que les proportions relatives en poids entre le composé Ia ou Ib d'une part, le composé II d'autre part, vont de 10 : 1 à 0,1 : 1.

**4.** Procédé pour combattre les mycètes nuisibles, caractérisé par le fait que l'on traite les mycètes nuisibles, leur habitat ou les végétaux, semences, sols, surfaces, matériaux ou locaux qu'on veut protéger contre les mycètes par le composé de formule Ib selon la revendication 1 et le composé de formule II selon la revendication 1.

**5.** Procédé selon la revendication 4, caractérisé par le fait que l'on utilise en outre un dithiocarbamate III selon la revendication 2.

**6.** Procédé selon la revendication 4 ou 5, caractérisé par le fait que l'on applique le composé Ib selon la revendication 1 et le composé II selon la revendication 1 simultanément, ensemble ou séparément, ou successivement.

**7.** Procédé selon la revendication 4 ou 5, caractérisé par le fait que l'on traite les mycètes nuisibles, leur habitat ou les végétaux, semences, sols, surfaces, matériaux ou locaux qu'on veut protéger contre les mycètes par 0,01 à 0,5 kg/ha du composé Ib selon la revendication 1.

**8.** Procédé selon la revendication 3, caractérisé par le fait que l'on traite les mycètes nuisibles, leur habitat ou les végétaux, semences, sols, surfaces, matériaux ou locaux qu'on veut protéger contre les mycètes par 0,01 à 0,5 kg/ha du composé II selon la revendication 1.

**9.** Procédé selon la revendication 5, caractérisé par le fait que l'on utilise le dithiocarbamate III en proportions de 2 : 1 à 50 : 1 par rapport au composé I.

**10.** Utilisation du composé I selon la revendication 1 pour la préparation de mélanges fongicides à activité synergique selon la revendication 1 ou 2.

**11.** Utilisation du composé II selon la revendication 1 pour la préparation de mélanges fongicides à activité synergique selon la revendication 1.

**12.** Utilisation des dithiocarbamates III selon la revendication 2 pour la préparation de mélanges fongicides à activité synergique selon la revendication 2.

**Revendications pour les Etats contractants suivants : AT, BE, CH, DE, DK, GB, GR, IE, NL, PT, SE**

**1.** Mélange fongicide contenant

a) un ester d'acide oximéthercarboxylique de formule Ia ou Ib et

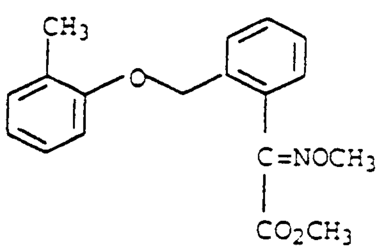

Ia

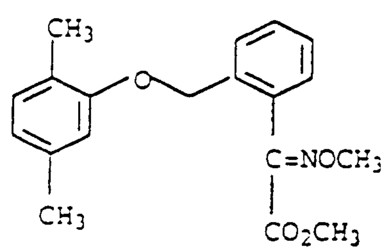

Ib

b) la 1-(2-cyano-2-méthoxyiminoacétyl)-3-éthylurée II

$$H_3CCH_2\text{-NHCONH-CO-C(CN)=NOCH}_3 \qquad \text{II}$$

en quantité synergique efficace.

2. Mélange contenant l'ester d'acide oximéthercarboxylique Ia ou Ib selon la revendication 1, la 1-(2-cyano-2-méthoxyiminoacétyl)-3-éthylurée II et un dithiocarbamate III choisi dans le groupe suivant :

- éthylènebis-(dithiocarbamate) de manganèse, (complexe de zinc) (IIIa),
- éthylènebis-(dithiocarbamate) de manganèse (IIIb),
- éthylènebis-(dithiocarbamate) ammoniacal de zinc (IIIc) et
- éthylènebis-(dithiocarbamate) de zinc (IIId)

en quantité synergique efficace.

3. Mélange fongicide selon la revendication 1 ou 2, caractérisé par le fait que les proportions relatives en poids entre le composé Ia ou Ib d'une part, le composé II d'autre part, vont de 10 : 1 à 0,1 : 1.

4. Procédé pour combattre les mycètes nuisibles, caractérisé par le fait que l'on traite les mycètes nuisibles, leur habitat ou les végétaux, semences, sols, surfaces, matériaux ou locaux, contre lesquels on veut les protéger, par le composé de formule Ia ou Ib selon la revendication 1 et le composé de formule II selon la revendication 1.

5. Procédé selon la revendication 4, caractérisé par le fait que l'on utilise en outre un dithiocarbamate III selon la revendication 2.

6. Procédé selon la revendication 4 ou 5, caractérisé par le fait que l'on applique le composé Ia ou Ib selon la revendication 1 et le composé II selon la revendication 1 simultanément, ensemble ou séparément, ou successivement.

7. Procédé selon la revendication 4 ou 5, caractérisé par le fait que l'on traite les mycètes nuisibles, leur habitat ou les végétaux, semences, sols, surfaces, matériaux ou locaux qu'on veut protéger contre les mycètes nuisibles par 0,01 à 0,5 kg/ha du composé Ia ou Ib selon la revendication 1.

8. Procédé selon la revendication 3, caractérisé par le fait que l'on traite les mycètes nuisibles, leur habitat ou les végétaux, semences, sols, surfaces, matériaux ou locaux qu'on veut protéger contre les mycètes nuisibles par 0,01 à 0,5 kg/ha du composé II selon la revendication 1.

9. Procédé selon la revendication 5, caractérisé par le fait que l'on utilise le dithiocarbamate III en proportions relatives à 2 : 1 à 50 : 1 par rapport au composé I.

10. Utilisation du composé I selon la revendication 1 pour la préparation des mélanges fongicides à activité synergique selon la revendication 1 ou 2.

11. Utilisation du composé II selon la revendication 1 pour la préparation des mélanges fongicides à activité synergique selon la revendication 1.

12. Utilisation des dithiocarbamates III selon la revendication 2 pour la préparation des mélanges fongicides à activité synergique selon la revendication 2.